Europäisches Patentamt

(19) European Patent Office · (11) Publication number: **0 050 173**

Office européen des brevets **B1**

(12) **EUROPEAN PATENT SPECIFICATION**

(45) Date of publication of patent specification: **20.02.85**   (51) Int. Cl.⁴: **B 29 D 29/00**

(21) Application number: **80303717.5**

(22) Date of filing: **21.10.80**

(54) **Method of making a ribbed belt.**

(43) Date of publication of application:
**28.04.82 Bulletin 82/17**

(45) Publication of the grant of the patent:
**20.02.85 Bulletin 85/08**

(84) Designated Contracting States:
**AT CH DE FR GB IT LI NL SE**

(56) References cited:
**US-A-2 188 456**
**US-A-2 660 243**
**US-A-3 477 895**
**US-A-3 565 984**
**US-A-3 818 576**
**US-A-3 891 405**
**US-A-4 177 688**

(73) Proprietor: **MITSUBOSHI BELTING LTD.**
**No. 1-21, Hamazoedori 4-Chome Nagata-ku**
**Kobe-shi Hyogo (JP)**

(72) Inventor: **Tanaka, Hiroyuki**
**No. 6-46, Kamitakamaru 1-chome Tarumi-ku**
**Kobe-shi Hyogo (JP)**
Inventor: **Yamaguchi, Tadashi**
**No. 24, Minami-shimohara-cho**
**Kasugai-shi Aichi (JP)**

(74) Representative: **Jones, Michael Raymond et al**
**HASELTINE LAKE & CO. Hazlitt House 28**
**Southampton Buildings Chancery Lane**
**London WC2A 1AT (GB)**

Courier Press, Leamington Spa, England.

**Description**

This invention relates to power transmission belt manufacture and more particularly to a method of making an endless power transmission ribbed belt. Such a ribbed belt is thin and flexible compared with ordinary V-belts, and is excellent in high-speed rotation and its ability to transmit power. Such ribbed belts are, therefore, widely used in drive devices of automobiles wherein the power transmission belt is arranged in a serpentine path about the crank pulley, alternator pulley, a cooler pulley, etc.

A method (1) of forming a belt using a tubular matrix is disclosed in U.S. Letters Patents Nos. 3,839,116 and 3,981,206. The method disclosed therein comprises building up successively a lower fabric, a lower rubber layer, a tensile member, an upper rubber layer, and an upper fabric, on a tubular matrix having a plurality of V-grooves in a circumferential direction inserted into a cylindrical drum, to form a vulcanized belt sleeve having a plurality of V-grooves. The belt sleeve is then cut into individual belts.

Another method (2) of forming a belt using a grinding wheel is disclosed in U.S. Letters Patents Nos. 3,891,405, 3,818,576, 3,822,516 and 4,177,688 (which shows the features of the first part of claim 1), in which the vulcanized belt sleeve is formed on a mandrel and ground with a contoured grinding wheel to precisely define the desired plurality of longitudinally extending ribs.

Another method (3) of forming a belt is using a Rotocure mechanism as disclosed in U.S. Letters Patent No. 4,139,406, in which a formed belt sleeve is laid over the Rotocure mechanism having a plurality of V-grooves to define the desired ribbed section belt.

A casting method (4) of forming a belt is disclosed in U.S. Letters Patent No. 3,813,197 and Great Britain Patent No. 1,123,225, which comprises the fixing of an inner mold having a fabric and a tensile member wound thereon, in an outer mold having a plurality of V-grooves arranged circumferentially along its inner surface, casting urethane elastomeric material in the mold cavity to form a belt sleeve, and cutting the belt sleeve into the desired final belts.

In carrying out methods (1), (2) and (3), the method using a grinding wheel (2) and the method using Rotocure (3), the ribbed belts may be made of an ordinary rubber, such as NR, SBR, CR, etc. In method (1), the use of a flat lower rubber layer on the tubular matrix is disadvantageous in that the tensile members may fall into the V-grooves of the tubular matrix during vulcanization and thus become arranged randomly, which may result in an undesirable stretchable belt. However, the use of a ribbed lower rubber layer prevents such defects, and the manufacture of the belts is facilitated and improved. Another serious disadvantage in method (1) lies in the difficulty of removing the formed belt sleeve from the tubular matrix which conventionally causes a short lift of the tubular matrix.

In method (2), the surface temperature of the vulcanized belt sleeve reaches more than 100°C during the grinding process so that reversion, due to a break in the intermolecular bonds, occurs on the surface of the sleeve. This may produce troublesome sticky adhesion. Also, since the yieldable belt sleeve is deformed by the grinding wheel during the grinding operation, it is difficult to grind the V-grooves accurately. The material and roughness of the grinding wheel must be correlated with the hardness of the belt sleeve.

A problem arises in the method (3) manufacture in that the belt sleeve shrinks when it is removed from the heated Rotocure mechanism. The thermal efficiency of the process is therefore very low because the Rotocure mechanism must be cooled before the belt sleeve is removed necessitating repeating heating and cooling steps.

The above mentioned methods, which have been developed for making ribbed belts, have drawbacks concerning the accuracy of the V-grooves, sticky adhesion of rubber in proportion to the generation of heat, dimensional instability after vulcanization, high cost, etc.

United States Patent Specification No. 2,188,456 discloses a method of cutting grooves in rubber applicator rolls. In this method, a circular saw is urged into a rotating applicator roll to form a spiral groove in the roll. Before this groove is formed, the surface of the roll is ground to a true, fairly smooth cylinder with a flat faced grinding wheel. The groove thus formed is not V-shaped but has a trapezoidal cross-section.

The present invention provides an improved belt manufacture eliminating the disadvantages of the background art methods discussed above in a novel and simple manner.

An object of the invention is to provide a method of making a ribbed belt in which the V-grooves of the ribbed belt are accurately formed.

Another object of the invention is to provide such a method of making a ribbed belt in which the cutting of the V-grooves is effected in such a manner as to prevent sticky adhesion of the vulcanized belt sleeve.

The present invention provides a method of forming a plurality of longitudinal tapered ribs, in a drive belt, in which method a vulcanized belt sleeve having an elastomeric drive surface portion is moved longitudinally through a cutting position, characterized in that a plurality of V-shaped milling cutters each having a cutting region with a triangular cross-section is urged into the drive surface portion of the moving belt sleeve at a rate of approximately 2 to 10 millimetres per minute while the cutters are moved concurrently in a direction opposite to the movement of the belt sleeve and at a linear speed which is from 30 to 130 times the linear speed of movement of the drive surface portion, the belt sleeve being mounted on a driving mandrel and a driven mandrel, and the cutters engaging a portion of the belt sleeve mounted on the driven mandrel to form sharp tipped V-shaped grooves in the belt.

Thus the present invention makes it possible accurately to cut V-grooves into the belt sleeve; the belt sleeve produced in this manner may then conveniently be cut into the desired belts.

This invention will be described in detail, by way of example, with reference to the accompanying drawings wherein:

Figure 1 is a transverse section, with parts cut away, showing a ribbed belt formed by a manufacturing method in accordance with the present invention;

Figure 2 is a fragmentary section showing a first step in the method of forming the vulcanized belt sleeve;

Figure 3 is a view of the cutters together with a cross-sectional view of the belt sleeve mounted via an expandable tubular member on the driven mandrel;

Figure 4 is an elevation of a double angle milling cutter tool for cutting the sleeve;

Figure 5 is a fragmentary sectional view taken along line 5—5 of Figure 4;

Figure 6 is-a fragmentary sectional view illustrating the arrangement of the cutter tool at the completion of a cutting operation;

Figure 7 is a view similar to that shown in Figure 3, but with the belt sleeve mounted directly on the driven mandrel;

Figure 8 is a cross-section of a ribbed belt like that shown in Figure 7 with the cutters abutting the belt; and

Figure 9 is a side elevation showing the arrangement of the driving mandrel and the driven mandrel in the method of manufacturing a ribbed belt in accordance with the present invention.

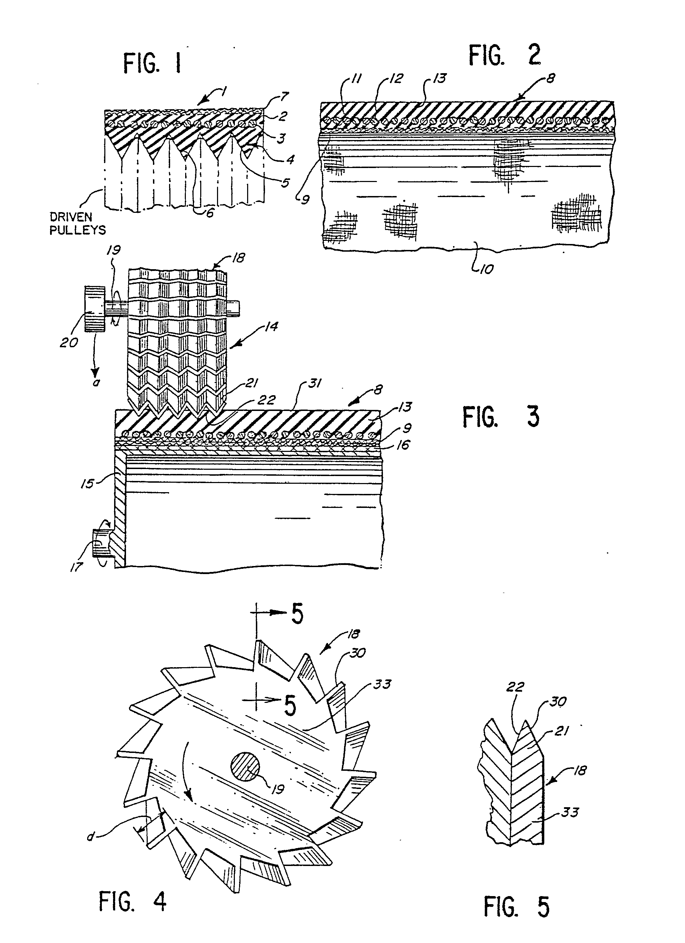

Reference is now made to Figure 1 of the drawing which illustrates one exemplary embodiment of a ribbed belt, generally designated 1, manufactured by the method of the present invention. Ribbed belt 1 is made primarily of elastomeric material and comprises an upper rubber layer 2, a ropelike tensile member 3 made of, for instance, polyester fibres or aromatic polyamide fibres high in strength and low in elongation, and a ribbed section 4 defined by a plurality of longitudinally extending V-grooves 5 and ribs 6 having a triangular cross section configuration. As shown, upper rubber layer 2 of belt 1 may be provided with an outer fabric cover layer 7.

Belt 1 is formed from a sleeve 8. The manufacture of sleeve 8 is illustrated in Figure 2.

As shown, a stretchable fabric 9 is wound onto a cylindrical drum 10 in one or more plies. Fabric 9 comprises a bias fabric having high stretchability, and may illustratively have warps and wefts forming a cross angle of 90 to 155 degrees. A lower rubber layer 11 is wound on the fabric 9. Thereafter, a ropelike tension member 12 made of, for instance, polyester fibres high in strength and low in elongation and covered with a cushioning rubber layer, is spirally wound onto lower rubber layer 11. The thickness of upper layer 13 is preferably greater than that of lower rubber layer 11. Upper rubber layer 13 is laminated on the layer of the tensile member 12 and the assembly thus obtained is vulcanized in accordance with techniques well known in the art to form the completed belt sleeve 8.

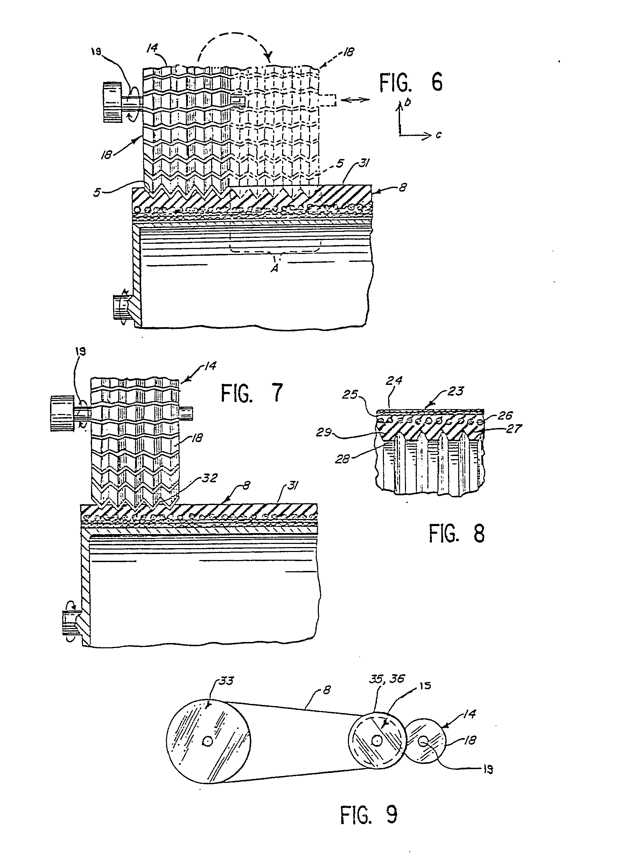

The vulcanized belt sleeve 8 is removed from the drum 10 and mounted on, and stretched between, a driven mandrel 15 (shown in Figures 3 and 9) and a driving mandrel 33 (shown in Figure 9). The driven mandrel 15 has flanges 35, 36 on each side for preventing transverse shifting of the belt sleeve 8 during the cutting step. The belt sleeve is then cut by means of a milling attachment 14. The rotating milling attachment 14 cuts the rotating belt sleeve 8 in a novel manner to provide an improved highly accurate ribbed configuration.

As shown in Figures 9 and 3, the belt sleeve 8 is mounted on the mandrels 33 and 15 so that upper rubber layer 13 defines the outer surface 31 of the belt sleeve. Prior to mounting the belt sleeve 8 on the mandrels 15 and 33, an expandable tubular member 16 may be mounted concentrically around the driven mandrel 15 and preferably held in position by the frictional engagement of its inner surface with the outer surface of the driven mandrel 15. The expandable tubular member 16 is desirable in preventing damage to the cutter blades 30 in the finishing process. Tubular member 16 illustratively may be formed of an inexpensive elastomeric material.

Mandrel 15 is then rotated in the indicated arrow direction by a suitable drive (not shown) connected to a drive shaft 17 of the mandrel.

Milling attachment 14 includes a plurality of double angle milling cutters 18 carried on a drive shaft generally designated 19, and a drive means 20 for driving the drive shaft 19 in an opposite direction of rotation as indicated by the arrow in Figure 3. The number of double angle milling cutters 18 mounted on the drive shaft 19 is determined by the number of V-grooves desired in the ribbed belt. The surface configuration of the milling attachment comprises V-shaped protrusions 21 and V-shaped grooves 22 corresponding to the configuration of ribbed section 4 of belt 1.

Each double angle milling cutter 18, as shown in Figures 4 and 5, is defined by a circular body section 33 and a plurality of cutting edges 30 regularly arranged about its circumference. The depth (d) of cutter edge 30 is almost equal to that of the ribs in the belt. Cutting edge 30, as shown, has a triangular cross section configuration. The double angle milling attachment 14 must be rotated in the direction designated by the arrow, in such a manner that precise V-grooves are cut into the outer surface 31 of the belt sleeve 8.

By causing the attachment 14 and driven mandrel 15 to be rotated in opposite directions, it is possible to cut precise accurate V-grooves as a result of the double angle milling cutters pushing into the belt sleeve, whilst at the same time, the life of the cutting edge is effectively maximized.

In effecting the cutting of the V-grooves in the belt section 13, the rotating milling attachment 14 is slowly moved toward the rotating mandrel 15, namely, in the arrow direction (a) shown in Figure 3, by a translating means 20 to urge the cutter into one end portion of the belt sleeve 8 whereupon the desired V-grooves are accurately cut into the outer surface 31 of the belt sleeve. In order to form the desired triangular ribs 6, the double angle milling cutters 18 are pushed into the belt sleeve until the top of the V-shaped grooves 22 thereof are disposed at the outer surface 31 of the belt sleeve.

The speed of operation of the milling attachment 14 is such that the linear speed of the cutters where they are in contact with the belt sleeve is from 30 to 130 times the linear speed of the surface 31 in order to provide the V-grooves of the belt with a proper rough surface. At a ratio of less than approximately 30 to 1, the surfaces of the V-grooves are excessively rough, and the cutting step is inefficiently time consuming. On the other hand, at a ratio of more than 130 to 1, the V-groove surface of the belt is undesirably smooth so that the belt is liable to slip in use because of the low coefficient of friction.

The desirable ratio of feed of milling attachment 14 radially toward mandrel 15 is a function of the hardness of the belt sleeve. More specifically, since each of the double angle milling cutters 18 is concurrently engaging upper rubber layer 13 in the cutting operation, there is a tendency for upper rubber layer 13 to deform.

The upper and lower layers 13 and 16 may be made of a suitable elastomeric material, such as NR, SBR, rubber compound obtained by mixing short fibres in the above described rubber, polyurethane resin, etc. The hardness (Shore-A) of the elastomeric material is preferably from approximately 75° to 90°. The feed velocity of milling attachment 14 cutters into the belt sleeve outer layer is approximately 2 to 10 mm/min.

If the feed velocity of the milling attachment is greater than 10 mm/min., it is difficult to cut the V-grooves precisely because of the resultant deformation of the belt sleeve. The milling attachment may be moved into the belt sleeve at a constant speed or intermittently, as desired.

Figure 6 shows the arrangement of the apparatus at the end of the cutting step. The milling cutters have been urged deeply into the belt sleeve to a position near tensile member 12 whereby precise V-grooves are cut into the outer layer of the belt sleeve.

The milling attachment 14 is then moved by translating means 20 away from mandrel 15 in the arrow direction (b) shown in Figure 6, to space the cutters from the sleeve belt.

The milling attachment 14 may now be moved by means 20 in the direction of the arrow (c), i.e. parallel to the drive shaft 17 into alignment with belt sleeve portion A to permit V-grooves to be cut in the portion A in a manner similar to that discussed above.

As will be obvious to those skilled in the art, milling attachment 14 may be moved automatically in a preselected manner to provide the cut belt.

The belt sleeve having the plurality of V-grooves is then suitably cut into discrete annular ribbed belts by a conventional cutting machine, as well known in the art.

Figure 7 illustrates a modified method embodying the invention for manufacturing another exemplary embodiment of ribbed belt 23 illustrated in Figure 8. Belt 23 is flat across the top 29 of the ribbed section 27. Ribbed belt 23, as shown in Figure 8, comprises an outer fabric layer 24, an upper rubber layer 25, a tensile member 26, and a ribbed section 27. Section 27 is defined by a plurality of longitudinally extending ribs 28 each having a trapezoidal cross section. It will be seen that the thickness of the upper rubber layer 13, shown in Figure 7, may be a fraction, such as half of that of the upper rubber layer 13 shown in Figures 3 and 6.

The double angle milling cutters 18 are urged only partially into belt sleeve 8 so that the top 32 of the V-shaped groove 22 remains spaced from outer surface 31 of belt sleeve 8. Resultingly, ribbed section 27 defines a trapezoidal cross section configuration. The final manufacturing step in forming the belt 23 may be carried out as described above relative to belt 1.

Thus, in accordance with the present invention, the V-grooves of the ribbed belts are cut precisely into the rib-forming section and have a preselected desired rough surface. The ribbed belts thusly manufactured have excellent power transmission characteristics and do not produce sticky adhesion as a result of generation of heat in use.

Thus, the method of belt manufacture of the present invention provides a significantly improved manufacture of such ribbed belts, overcoming the prior art problems incurred in the use of grinding wheels to form the belt grooves.

It is apparent that other modifications may be made without departing from the scope of this invention.

**Claims**

1. A method of forming a plurality of longitudinal tapered ribs, in a drive belt, in which method a vulcanized belt sleeve having an elastomeric drive surface portion is moved longitudinally through a cutting position, characterised in that a plurality of V-shaped milling cutters (18) each having a cutting region with a triangular cross-section is urged into the drive surface portion (13) of the moving belt sleeve (8) at a rate of approximately 2 to 10 millimetres per minute while the cutters are moved concurrently in a direction opposite to the movement of the belt sleeve and at a linear speed which is from 30 to 130 times the linear speed of movement of the drive surface portion, the belt sleeve being mounted on a driving mandrel (33) and a driven mandrel (15), and the cutters engaging a portion of the belt sleeve mounted on the driven mandrel to form sharp tipped V-shaped grooves (5) in the belt.

2. A method according to claim 1, wherein the width of the belt sleeve (8) is at least twice that of the plurality of the cutters (18) and the method further includes removing the cutters from engagement with the belt sleeve upon completion of the formation of a first group of ribs and causing the plurality of cutters to form a second group (A) of ribs adjacent the first group.

3. A method according to claim 1 or 2, wherein the cutters are urged fully into the drive surface portion to define triangular ribs (6).

4. A method according to claim 1 or 2, wherein the cutters are urged less than fully into the drive surface portion to define trapezoidal ribs (28).

5. A method according to claim 1 or 2, wherein there are V-shaped grooves between the cutters, and the cutters are fed into the belt sleeve until the tops of the V-shaped grooves between the cutters are in a preselected spaced relationship to the outer surface of the belt sleeve to form a ribbed section having a substantially trapezoidal cross-section configuration.

6. A method according to any preceding claim, wherein an expandable tubular member (16) extends concentrically about the driven mandrel (15) and is held in position thereon by frictional engagement of its inner surface with the outer surface of the driven mandrel, prior to mounting the belt sleeve on the driven mandrel.

**Revendications**

1. Un procédé de formation d'une pluralité de nervures longitudinales évasées dans une courroie de transmission, dans lequel proccédé ont fait défiler longitudinalement un manchon de courroies vulcanisé présentant une partie de surface d'entraînement en élastomère à travers une position de taillage, caractérisé en ce que l'on fait avancer une pluralité de fraises à profil en V (18), présentant chacune une région tranchante à section triangulaire, dans la partie de surface d'entraînement (13) du manchon de courroies en mouvement (8) à une vitesse d'environ 2 à 10 millimètres par minute en même temps que les fraises sont mises en mouvement en sens inverse du mouvement du manchon de courroies et à une vitesse linéaire qui est de 30 à 130 fois la vitesse linéaire du mouvement de la partie de surface d'entraînement, le manchon de courroies étant monté sur un mandrin moteur (33) et un mandrin entraîné (15), et les fraises attaquant une partie du manchon de courroies monté sur le mandrin entraîné pour former des gorges (5) à profil en V, à pointe vive dans la courroie.

2. Un procédé selon la revendication 1, dans lequel la largeur du manchon de courroies (8) est au moins deux fois supérieure à celle de la pluralité des fraises (18) et qui consiste en outre à écarter les fraises de leur prise avec le manchon de courroies après la formation d'un premier groupe de nervures et à amener la pluralité de fraises à former un second groupe (A) de nervures adjacent au premier groupe.

3. Un procédé selon la revendication 1 ou 2, dans lequel les fraises sont enfoncées totalement dans la partie de surface d'entraînement pour définir des nervures triangulaires (6).

4. Un procédé selon la revendication 1 ou 2, dans lequel les fraises sont enfoncées moins que totalement dans la partie de surface d'entraînement pour définir des nervures trapézoïdales (28).

5. Un procédé selon la revendication 1 ou 2, dans lequel il y a des gorges à profil en V entre les fraises et on fait avancer les fraises dans le manchon de courroies jusqu'à ce que les sommets des gorges à profil en V comprises entre les fraises se trouvent dans une position d'espacement présélectionnée par rapport à la surface extérieure du manchon de courroies pour former une partie nervurée ayant une configuration de section pratiquement trapézoïdale.

6. Un procédé selon l'une quelconque des revendications précédentes, dans lequel un élément tubulaire expansible (16) s'étend concentriquement autour du mandrin entraîné (15) et est maintenu en position sur ce mandrin en contact par friction entre sa surface intérieure et la surface extérieure du mandrin entraîné, préalablement au montage du manchon de courroies sur la mandrin entraîné.

**Patentansprüche**

1. Verfahren zum Erzeugen mehrerer in Längsrichtung verlaufender und sich verjüngernder Rippen in einem Antriebsriemen, bei welchem ein einen Antriebsflächenbereich aus einem Elastomer aufweisender vulkanisierter Riemenschlauch in Längsrichtung durch eine Schneidstation geführt wird, dadurch gekennzeichnet, daß mehrere V-förmige Fräser (18), von welchen jeder einen einen dreieckigen Querschnitt besitzenden Schneidbereich besitzt, mit einer Geschwindigkeit von annähernd 2 bis 10 mm/min in den Antriebsflächenbereich (13) des bewegten Riemenschlauches (8) abgesenkt werden und hiebei die Fräser gleichzeitig in einer zur Bewegungsrichtung des Riemenschlauches entgegengesetzten Richtung mit einer das 30- bis 130-fache der linearen Bewegungsgeschwindigkeit des Antriebsflächenbereiches betragenden linearen Geschwindigkeit bewegt werden, wobei der Riemenschlauch auf einem Antriebsdorn (33) und einem angetriebenen Dorn (15) montiert ist und die Fräser zwecks Ausbildung scharfkantiger V-förmiger Nuten (5) im Riemen einen am angetriebenen Dorn befindlichen Bereich des Riemenschlauches bearbeiten.

2. Verfahren nach Anspruch 1, worin die Breite des Riemenschlauches (8) zumindest das zweifache der insgesamt vorgesehenen Fräser (18) beträgt und das Verfahren weiters das Abheben der Fräser vom Riemenschlauch nach vollständigem Ausbilden einer ersten Gruppe von Rippen und das Veranlassen der mehrfach vorgesehenen Fräser eine der ersten Gruppe von Rippen benachbarte zweite Gruppe (A) zu fräsen umfaßt.

3. Verfahren nach Anspruch 1 oder 2, worin die Fräser zwecks Ausbildung dreieckiger Rippen (6) zur Gänze in den Antriebsflächenbereich eingeführt werden.

4. Verfahren nach Anspruch 1 oder 2, worin die Fräser zwecks Ausbildung trapezförmiger Rippen (28) weniger als zur Gänze in den Antriebsflächenbereich eingeführt werden.

5. Verfahren nach Anspruch 1 oder 2, worin zwischen den Fräsern V-förmige Nuten vorgesehen sind und die Fräser in den Riemenschlauch eingeführt werden bis die zwischen den Fräsern befindlichen V-förmigen Nuten sich mit ihrem Grund in einem vorbestimmten Abstand von der Außenseite des Riemenschlauches befinden um einen gerippten Abschnitt zu erzeugen, der im wesentlichen eine trapezförmige Querschnittskonfiguration besitzt.

6. Verfahren nach irgendeinem der vorhergehenden Ansprüche, worin sich ein aufweitbares, rohrförmiges Glied (16) konzentrisch um den angetriebenen Dorn (15) erstreckt und darauf durch Reibungsschluß zwischen seiner Innenfläche und der Außenfläche des angetriebenen Dorns in seiner Lage gehalten wird, und dies vor dem Montieren des Riemenschlauches auf dem angetriebenen Dorn.

FIG. 1

7
2
3
4
5
6
1

DRIVEN
PULLEYS

FIG. 2

11   12   13   8
9
10

19   18

20

14

a

21
22   31   8
13
9
16

15

17

FIG. 3

→ 5

18
30
33

5

19

d

FIG. 4

22   30
21
18
33

FIG. 5

1

FIG. 6

FIG. 7

FIG. 8

FIG. 9